# EUROPEAN PATENT SPECIFICATION

(11) **EP 3 647 585 B1**
(45) Date of publication and mention of the grant of the patent: **28.04.2021**
(21) Application number: 19205675.2
(22) Date of filing: 28.10.2019
(51) Int. Cl.: F03B 1/02, F03B 3/12, C23C 28/02, C23C 4/06, C23C 4/123, C23C 4/129, C23C 30/00

(54) **HYDRO-ELECTRIC TURBINE COMPONENT HAVING ENHANCED LIFE SPAN AND METHOD FOR FORMING THE SAME**
HYDROELEKTRISCHE TURBINENKOMPONENTE MIT ERHÖHTER LEBENSDAUER UND VERFAHREN ZU IHRER HERSTELLUNG
COMPOSANT DE TURBINE HYDRO-ÉLECTRIQUE AYANT UNE DURÉE DE VIE ACCRUE ET SON PROCÉDÉ DE FABRICATION

(30) Priority: 02.11.2018 IN 201841041634; 19.02.2019 IN 201841041634
(43) Date of publication of application: 06.05.2020
(73) Proprietor: GE Renewable Technologies, 38100 Grenoble (FR)
(72) Inventor: PANCHAL, Rajesh, 390013 Vadodara Gujarat (IN); ANAND, Krishnamurthy, 560066 Bengaluru (IN); DASAN, Biju, 560066 Bengaluru (IN)
(74) Representative: Brevalex

(56) References cited:
- EP-A1- 0 224 827
- EP-A1- 2 213 407
- CN-B- 103 276 341
- JP-A- H04 325 603
- US-A1- 2005 112 411
- US-A1- 2009 297 720

## Description

### FIELD OF THE INVENTION

The present invention generally relates to a hydro-electric turbine component having enhanced life span and a method for forming the component. Specifically, this invention relates to a hydro-electric turbine component having a coated wedge-shaped substrate and a method for coating the wedge-shaped substrate.

### BACKGROUND

Erosion-resistant coatings are frequently used on hydro-electric turbine components such as runners and guide vanes for Francis-type and Kaplan-type turbines, runners, needles, and seats for Pelton-type turbines, and various other components that are prone to sediment (silt) erosion (see e.g. US 2005/112411 A1). Erosion of these components generally occurs by impingement of various types of sediments (including sand) in the water and particles contained therein (e.g., SiO₂, Al₂O₃, Fe₂O₃, MgO, CaO, clays, volcanic ash, and the like) that are carried by moving bodies of water. Existing base materials for hydro-electric turbine components such as martensitic stainless steels do not have adequate erosion resistance under these conditions. For example, hydro-electric turbine components when exposed to sediment in the rivers that exceed 1 kilogram of sediment per cubic meter of water have been found to undergo significant erosion. This problem can be particularly severe in Asia, South America, and Alps region, where the sediment content during the rainy season can exceed 5 kilograms per cubic meter of water. The severe erosion results in damages of turbine components causing frequent maintenance related shutdowns, loss of operating efficiencies, and need to replace various components on a regular basis.

To reduce or avoid erosion problems, various anti-erosion coatings have been developed to mitigate erosion or to prolong life of the components. Current erosion resistant coatings are usually applied by thermal spray processes, such as air plasma spray (APS), and high velocity oxy-fuel (HVOF). One limitation to current thermal spray processes is the limited coating thicknesses available due to high residual stress that results as thickness is increased by these methods. As a result, the final coating is relatively thin, typically lesser than 500 microns and fails to provide prolonged protection to the turbine component. Other limitations of these thermal spray processes are the oxidation and decomposition of the powder feed or wire feed stock during the coating process that form the anti-erosion coating, which can affect the overall quality of the finished coating. For example, spray processes such as plasma spray, wire spray, and HVOF are currently used for coating turbine components. These processes generally leave the resulting coating with relatively high porosity, high oxide levels, and/or tend to decarburize primary carbides, if present in the coating. All these factors have significant deleterious effect at reducing erosion resistance of the coatings, in addition to providing low thickness of the erosion coating layers.

Accordingly, there remains a need in the art for improved coating methods that provide effective protection against erosion resistance, such as that is required for hydro-electric turbine components. Improved coating methods on specific portions of hydro-electric turbine components desirably need coatings with a combination of high erosion resistance, low residual stresses, and higher thickness to provide a coating with long life and high erosion resistance even in high sediment concentration operating conditions.

### BRIEF DESCRIPTION OF THE INVENTION

A hydro-electric turbine component according to the invention is disclosed in independent claim 1; a method for coating a wedge-shaped substrate of a hydro-electric turbine component is disclosed in independent claim 10.

Disclosed herein are hydro-electric turbine components that are exposed to sediment during operation thereof and methods for enhancing life of the hydro-electric turbine component by applying erosion resistant coatings. In one aspect, a hydro-electric turbine component is disclosed. The hydro-electric turbine component includes a wedge-shaped substrate having a tip portion and at least two side portions. An erosion resistant coating is disposed on the wedge-shaped substrate. The erosion resistant coating disposed at the tip portion is at least 2 times thicker than the erosion resistant coating disposed at the side portions. The erosion resistant coating has at least 99.5 percentage density.

In another embodiment, a method for coating a wedge-shaped substrate of a hydro-electric turbine component is disclosed. The wedge-shaped substrate includes a tip portion and at least two side portions. The method includes the steps of coating the tip portion of the substrate by a high velocity air fuel process and then coating the side portions by the high velocity air fuel process. According to the invention, the method forms an erosion resistant coating on both the tip portion and the side portions such that the coating at the tip portion is at least 2 times thicker than the coating at the side portions.

In a hydro-electric turbine component or a method according to preferred embodiments of the invention, the hydro- electric turbine component:
* may have a thickness of the erosion resistant coating disposed at the tip portion in a range from 1 millimeter to 3 millimeters and a thickness of the erosion resistant coating disposed at the side portions in a range from 0.3 millimeters to 1 millimeter;
   and/or:
* may have an intermediate portion between the tip portion and the side portions, and the intermediate portion has a tapering of thickness from the tip portion to the side portions; for example, a method according to the invention may comprise coating an intermediate portion after coating the tip portion and prior to coating the side portions, wherein the intermediate portion is disposed between the tip portion and side portions;
   and/or;
* may have a radius of curvature of the tip portion in a range from 0.5 millimeters to 3.0 millimeters and/or:
* may have the erosion resistant coating in a base portion of the hydro-electric turbine component, wherein a thickness of the erosion resistant coating is in a range from 0.1 millimeter to 0.3 millimeter; and/or:
*an incident angle θ at the tip portion may be in a range from 15 degrees to 55 degrees.

In a hydro-electric turbine component according to the invention, the erosion resistant coating may comprise a metal matrix composite comprising a cobalt chromium matrix.

In a hydro-electric turbine component according to the invention, the wedge-shaped substrate may comprise a splitter of one of a Pelton bucket, a W-cutout of the Pelton bucket, a Pelton needle, a seat ring, a guide vane of Francis, Kaplan, Bulb, or pump turbine, a runner blade of Francis, Kaplan, Bulb, or pump turbine, or combinations thereof.

In a hydro-electric turbine component according to the invention, the erosion resistant coating can be crack-free and comprise less than 0.5 percentage oxide content and greater than 1250 HV0.3 hardness.

The above described and other features are exemplified by the following figures and detailed description.

### BRIEF DESCRIPTION OF THE DRAWINGS

FIG. 1 illustrates a hydro-electric turbine component in the form of a Pelton bucket, in accordance with some embodiments of the present specification.
FIG. 2 illustrates a coated wedge-shaped substrate, in accordance with some embodiments of the present specification.
FIG. 3 provides a cross-sectional view of a portion of the coated wedge-shaped substrate, in accordance with some embodiments of the present specification.
FIG. 4 provides a cross-sectional view of a Pelton bucket, in accordance with some embodiments of the present specification.
FIG. 5 provides an optical micrograph of a coated splitter sample of a Pelton bucket, in accordance with some embodiments of the present specification.
FIG. 6 provides a scanning electron micrograph of a cross-section of an erosion resistant coating, in accordance with some embodiments of the present specification.
FIG. 7 provides a graphical illustration of results of sediment erosion test of some representative samples, in accordance with some embodiments of the present specification.

### DETAILED DESCRIPTION

Disclosed herein are hydro-electric turbine components having an erosion resistant coating and coating methods that provide erosion resistance to components that are prone to sediment erosion. In various embodiments of the present specification, a high velocity air fuel (HVAF) process is employed for depositing erosion resistant coatings onto a component surface. The HVAF process is a material deposition process in which erosion resistant coatings are applied by exposing a substrate to a high-velocity jet of erosion resistant material powder at a velocity greater than 800 m/s. The erosion resistant material powder is accelerated and heated by a supersonic jet of low-temperature "air-fuel gas" combustion products. The HVAF spraying process deposits an extremely dense (minimal porosity) and substantially non-oxidized coating. Moreover, increased thicknesses can be obtained relative to other thermal / plasma spray processes, resulting in turbine components exhibiting superior erosion resistance properties and enhanced life time. The HVAF process utilizes a fuel such as kerosene, propane, propylene, low pressure gas (LPG), compressed natural gas (CNG), or the like, that is combusted with air as opposed to oxygen used in the HVOF process. Since the HVAF process ensures a greater particle velocity and a lower particle temperature, the coatings produced thereby have lower levels of oxidation and decarburization and lower residual stresses as compared to the coatings deposited by the HVOF process.

In the HVAF process, the particles that form the coating are heated and imparted with high kinetic energy due to the flame velocity. The particles are propelled toward a substrate that is to be coated and form a coating upon impact with the surface of the substrate. The high velocity and lower temperatures employed in the HVAF process enable formation of thick and dense coatings due to the low residual stresses associated with the process, thereby providing improved life of coatings in erosion prone environments.

In embodiments of the present specification, the HVAF process is advantageously used to impart erosion resistance to portions of components of the hydro-electric turbine components that are amenable to line of sight thermally sprayed coating processes. Thicknesses in excess of 500 micrometers (µm) have been obtained, and these coatings advantageously exhibit low levels of oxidation, low levels of decarburization and low residual stress. The HVAF process is advantageously utilized to produce coatings having hard particulates embedded in metallic binder matrix. As used herein, the term "hard particulates" generally refers to materials having a Mohs hardness greater than 7. In some embodiments, the hard particulates have Mohs hardness greater than 8. In certain embodiments, the Mohs hardness of the hard particulates may be greater than 9. The hard particulates may include metallic oxides, metallic borides, diamond, or nitrides or borides of a metal, silicon, or boron. As used herein, the term "diamond" is intended to include particles that substantially possess the hardness of the diamond molecular structure without necessarily possessing the corresponding molecular structure and is intended to include all forms of diamond particles including powders, flakes, and the like. The metallic binder may include metal or metal alloys, which in turn may also further include some non-metallic components such as, for example, ceramics, intermetallic phases, or intermediate phases. In some embodiments, the metallic binder includes ferrous alloys, nickel-based alloys, cobalt-based alloys, or combinations thereof. Advantageously, coating of hard particulates embedded in metallic binder matrix achieved by the HVAF process has limited dissolution of the hard phase, low residual stresses, and desired high thickness. The coating substrate design, coating materials, coating process parameters, and method are designed to obtain crack-free, tough, less-oxide content, less carburized, and dense erosion resistant coatings on the hydro-electric turbine component substrates without resulting in spallation or debonding of the coating. The combination of high primary hard phase content and high thickness makes HVAF coatings highly suitable for erosion resistance applications in hydro-electric turbines.

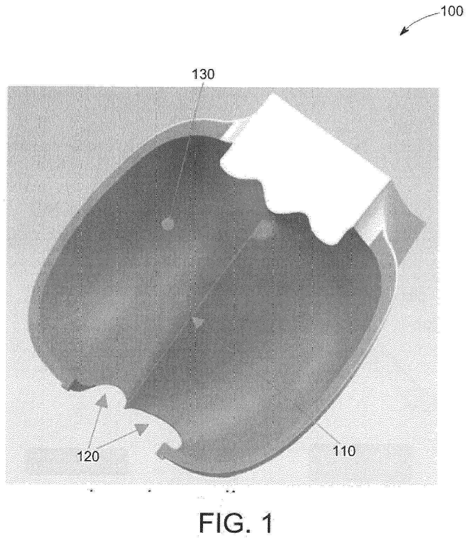

FIG. 1 illustrates a hydro-electric turbine component 100 in the form of a Pelton bucket. The Pelton bucket is used as a part of a Pelton wheel runner employed in a hydro-electric turbine. Various parts of the Pelton bucket may undergo erosion during operation of the hydro-electric turbine. Splitter 110 and W-cutout areas 120 marked in FIG. 1 are the sharp edges of the Pelton bucket and are considered as primary erosion areas in the Pelton bucket. The interior walls 130 of the Pelton bucket are the secondary areas of erosion in the Pelton bucket and are relatively less prone to the erosion in comparison to the primary erosion areas. Primary erosion leads to significant damage, which in turn imparts visibly noticeable changes in hydraulic profile of the splitter 110 and W-cutout areas 120. Present specification describes the profile of thick, crack-free erosion resistant coating applied to the primary erosion areas to prolong life of the hydro-electric turbine component 100 and method of achieving such coating. It is to be noted that Pelton bucket is only used as an example here, the coating method and the coating profile can be advantageously used for other hydro-electric turbine components that have wedge-shaped body parts and are prone to erosion. Non-limiting examples of the other hydro-electric turbine components include Pelton needles, seat rings, guide vanes, and runner blades of various turbines such as Francis turbines, Kaplan turbines, Bulb turbines, or pump turbines.

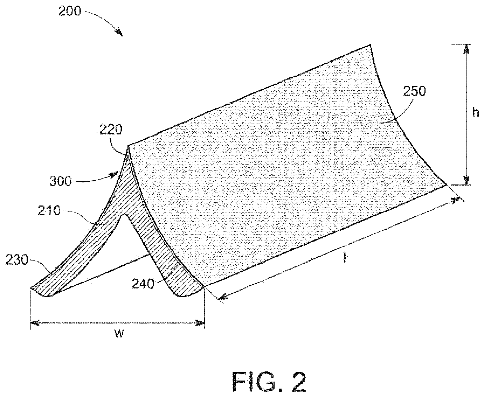

FIG. 2 illustrates a coated wedge-shaped substrate 200 having a length 1, width w, and height h. The coated wedge-shaped substrate 200 may be a part of any of the hydro-electric turbine components noted earlier. In the coated wedge-shaped substrate 200, an erosion resistant coating 250 is disposed over the wedge-shaped substrate 210. The wedge-shaped substrate 210 has a tip 220 and at least two sides 230 and 240. The tip 220 is relatively more erosion prone region of the wedge-shaped substrate 210 than the sides 230 and 240, in most of the hydro-electric turbine components. The hydro-electric turbine component 100 in the form of Pelton bucket illustrated in FIG. 1 includes the coated wedge-shaped substrate 200 having the erosion resistant coating 250 at the tip 220 and at both the sides 230 and 240. As illustrated in FIG. 2, in certain embodiments, the coating 250 covers the tip 220 and sides 230, 240 of the wedge-shaped substrate 210.

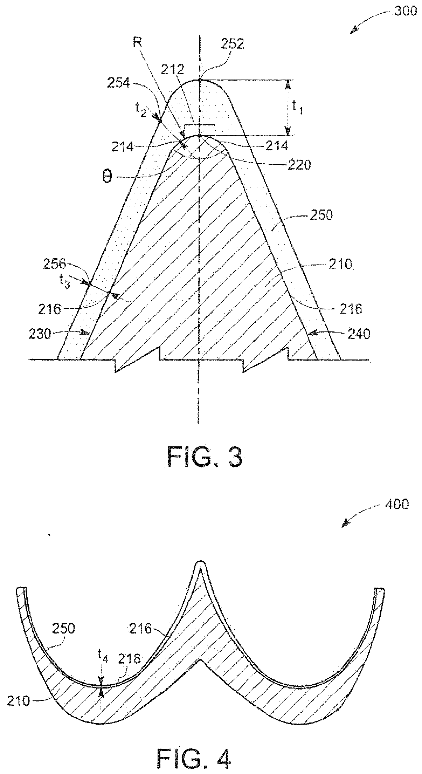

FIG. 3 provides a cross-sectional view 300 of a portion of the coated wedge-shaped substrate 200 of FIG. 2 and illustrates the coating profile on the wedge-shaped substrate 210, according to some embodiments of this specification. The wedge-shaped substrate 210 has a tip portion 212 including the tip 220. The tip 220 may be the inflection point of the substrate 210 at the tip portion 212. An erosion resistant coating (henceforth "coating", for brevity) 250 is disposed on the wedge-shaped substrate 210 at the tip portion 212 and on both the sides of the tip 220. Therefore, at least one side portion 216 at each of the sides 230 and 240 is coated with the coating 250 resulting in at least two coated side portions 216.

A thickness of the disposed coating 250 may be designed based on expected severity of erosion damage and the desired erosion protection at a particular portion. Consequently, in locations exposed to water flow at high angles of incidence such as those near to 90 degrees incidence angle, or at high levels of flux of water and sand, the thickness of the coating 250 may be maintained at a greater value than at the locations that are exposed to water flow at low angles of incidence to provide better protection for such locations in the wedge-shaped substrate 210. The thickness of the coating 250 at a given location is measured as the perpendicular height of the coating 250 at that location on the surface of the wedge-shaped substrate 210. By way of example, a thickness t₁ of the coating 250 at the tip portion 212 of the wedge-shaped substrate 210 is the perpendicular distance between the tip portion 212 of the substrate to the tip portion of the coating 250. For example, a thickness t₁ of the coating 250 at the tip 220 of the wedge-shaped substrate is the perpendicular distance between the tip 220 of the substrate to the tip 252 of the coating 250 along the height h (shown in FIG. 2). Similarly, thickness t₃ of the coating 250 at a side portion 216 of the wedge-shaped substrate 210 is the perpendicular distance between the side portion 216 of the substrate to the side portion 256 of the coating 250 in a direction perpendicular to the substrate at the point 216.

A thickness of the coating 250 disposed at the tip portion 212 is higher than a thickness of the coating disposed at the side portions 216. Further, the thickness t₁ of the coating 250 disposed at the tip portion 212 is at least 2 times than the thickness t₃ of the coating 250 disposed at the side portions 216. In certain embodiments, the thickness t₁ of the coating 250 disposed at the tip portion 212 is at least 3 times thicker than the thickness t₃ of the coating 250 disposed at the side portions 216. The coating 250 is applied on an outer surface of the wedge-shaped substrate 210 using a HVAF process. The HVAF process enables a high-dense coating having a density of at least 99.5 percentage (%). In some embodiments, the coating 250 is crack-free and an oxide content, if present, is less than 0.5% of total volume of the coating 250. In some embodiments, an oxide content in the coating 250 is less than 0.4% of total volume of the coating 250. A hardness of the coating 250 is greater than 1250 HV0.3. In some embodiments, the coating 250 is impact resistant to sediment particles travelling at velocities greater than 90 meters per second. The sediment particles may include some stones and pebbles of average size in a range from less than a millimeter to 10 millimeters in the water jet that impinges on the hydro-electric turbine component 100 such as the Pelton bucket.

In some embodiments, the thickness t₁ of the coating 250 disposed at the tip portion 212 is in a range from 1 millimeter (mm) to 3 mm. In certain embodiments, the thickness t₁ of the coating 250 at the tip portion 212 is in a range from 1.5 mm and 3 mm. In some embodiments, the thickness t₃ of the coating 250 disposed at the side portions 216 is in a range from 0.3 mm to 1 mm. Even though greater thickness of the coating 250 at the side portions 230, 240 is achievable, the coating thickness in a range from 0.3 mm to 1 mm may be sufficient to provide the required erosion protection for the side portions 216 of a wedge-shaped substrate, such as the substrate 210. The wedge-shaped substrate may be a Pelton bucket splitter. Some other hydroturbine components may require a thick coating on the edges and/or sides of substrates having various geometry. For example, in some embodiments, substrates such as runners and the guide vanes for Francis-type turbines may have thick coatings at the side portions and the thickness of the coatings may be greater than 1 mm. In some instances, thickness of coatings on the side portions may be in a range from about 1 mm to about 3 mm. The side portions are the portions of hydraulic water path without any tip.

As illustrated in FIG. 3, in some embodiments, the wedge-shaped substrate 210 further includes an intermediate portion 214 disposed between the tip portion 212 and the side portions 216, on the surface of the wedge-shaped substrate 210 and having the coating 250. Thickness t₂ of the coating 250 at the intermediate portion 214 of the wedge-shaped substrate 210 is the linear distance between the intermediate portion 214 of the substrate to the intermediate portion 254 of the coating 250 in a direction perpendicular to the substrate at the point 214. The thickness t₂ of the coating 250 at the intermediate portion 214 tapers from the thickness t₁ of the coating 250 at the tip portion 212 to the thickness t₃ of the coating 250 at the side portions 216. That is, the thickness t₂ of the coating 250 on the intermediate portion 214 is designed such that there is a gradual decrease in thickness of the coating 250 from the tip portion 212 to the side portions 216 along the sides 230, 240 (shown in FIG. 2) of the wedge-shaped substrate 210 without formation of any significant steps in the coating 250. The tapering of thickness in the intermediate portion 214 is designed to provide a crack-free and non-delaminated coating 250 on the wedge-shaped substrate 210. Thus, in some embodiments, the thickness t₂ of the coating 250 at the intermediate portion 214 may vary in a range from 0.3 mm to 3 mm, with an increased thickness of the coating 250 with increased height h in the wedge-shaped substrate 210.

In some embodiments, the hydro-electric turbine component 100 may further include the erosion resistant coating 250 in a base portion 218 of the hydro-electric turbine component, as shown in FIG. 4. Thickness t₄ of the coating 250 at the base portion 218 of the wedge-shaped substrate 210 is the perpendicular distance between the base portion 218 of the substrate to the base portion 258 of the coating 250 in a direction perpendicular to the substrate at the point 218. The thickness t₄ of the coating 250 at the base portion 218 may be equal to or less than the thickness t₃ of the coating 250 at the side portions 216 (shown in FIG. 3). In some embodiments, a thickness t₄ of the coating 250 at the base portion 218 is in a range from 0.1 mm to 0.3 mm. In some embodiments, the coating 250 of the side portions 216 and the base portion 218 have a tapering thickness between the coating in the side portions 216 and the base portion 218. In some embodiments, the thickness of the coating 250 at the tip portion 212, intermediate portions 214, side portions 216, and base portion 218 may have slight variation from one point to another point in the respective portions. Such variation may be less than 10% of the average thickness in the respective portions.

Referring back to FIG. 3, the tip portion 212 of the wedge-shaped substrate 210 has a curvature that is defined by a radius of curvature R, at the tip portion 212. The radius of curvature R defines hydraulic profile for impinging water on the wedge-shaped substrate 210 during operation of the hydro-electric turbine component. A smaller radius of curvature R indicating a sharp edge of the tip portion 212 ensures better level of efficiency of operation of the hydro-electric turbine component 100. For example, in a hydro-electric turbine component 100, a tip portion 212 of the wedge-shaped splitter has a narrow radius of curvature that aids in efficiently splitting an impinging water jet on the hydro-electric turbine component 100. With a greater radius of curvature at the tip portion 212, a water jet propelled by nozzle of the hydro-electric turbine may not convert complete kinetic energy into mechanical rotation, which in turn results in drop in efficiency. Radius of curvature R of the tip portion 212 influences property of the coating 250 formed on the substrate. For example, a smaller radius of curvature R of the tip portion 212 may lead to a smaller angle θ of the substrate (FIG. 3) and a coating 250 applied at the tip portion 212 may experience greater residual stress compared to a coating 250 applied on a tip portion 212 that has a greater radius of curvature R and greater angle θ. By applying the method for coating described in this specification, a robust, crack-free, and delamination free coating is applied on the substrate that has the tip portion 212 of small radius of curvature. In some embodiments, the radius of curvature R of the tip portion 212 is in a range from 0.5 mm to 3.0 mm. In certain embodiments, a radius of curvature R of the tip portion 212 is in a range from 1 mm to 2 mm. In certain other embodiments, a radius of curvature R of the tip portion 212 is less than 1 mm. In some embodiments, an incident angle θ at the tip portion is in a range from 15° to 55°. In hydro-electric turbine component 100, water also strikes on front W-cutout 120 (FIG. 1), where rate of erosion could be similar to or less than that of splitter 110. It should be noted that W-cutout 120 has tip portion and side portions, hence all combination of radius of curvature, incident angle θ, and thickness alternatives noted hereinabove for the splitter are also applicable to W-cutout 120.

In some embodiments, the wedge-shaped substrate includes a 13Cr 4Ni martensitic stainless-steel material. In some embodiments, the wedge-shaped substrate includes a 10Cr steel material. In certain embodiments, the wedge-shaped substrate includes a duplex stainless-steel material. In some embodiments, the wedge-shaped substrate may have a combination of any of 13Cr 4Ni martensitic stainless-steel, 10Cr steel, or duplex stainless-steel materials.

In some embodiments, the coating includes a metal matrix composite. In certain embodiments, the metal matrix composite includes a cobalt chromium matrix. In some embodiments, the cobalt chromium matrix includes cobalt in a range from 4 weight % to 12 weight % and chromium in a range from 2 weight % to 5 weight %, wherein the weight percentages are based on a total weight of the coating.

In certain embodiments, the metal matrix composite may be reinforced. a reinforcement of the metal matrix composite may be in the form of a plurality of hard particles. The metal matrix composite may include a plurality of hard particles including tungsten carbide, boron carbide, titanium nitride, titanium boride, silicon nitride, aluminum oxide, cubic boron nitride, or combinations thereof. In certain embodiments, the reinforcement of the metal matrix component is facilitated by including a plurality of tungsten carbide hard particles in the cobalt chromium matrix. An average diameter of the hard particles may be less than 2 micrometer (µm). In some embodiments, an average diameter of the hard particles in the plurality of particles is less than 1 µm. Further, in some embodiments, the plurality of hard particles has a bimodal size distribution. In some example embodiments, a D95 of the plurality of hard particles is less than or equal to 1 µm with less than 5% of the plurality of hard particles having an average particle size greater than 1 µm. In some other embodiments, 20% to 50% of the volume of the hard particles is in a size range of 500 nanometers (nm) to 1 µm, 20% to 50% of the volume is in a size range of 100-400 nm, and less than 5% of the volume of the hard particles is in a size range greater than 1 µm and less than 40 µm. It is advantageous to increase content of the hard particles in the coating. In some embodiments, the volume of the hard particles present in the metal matrix composite is greater than 60% of the total volume of the coating. An average spacing between the hard particles in the metal matrix composite may vary based on an amount or volume of the hard particles in the metal matrix composite, a size of the hard particles, or combinations thereof. In some embodiments, an average spacing between the tungsten carbide hard particles in a cobalt chromium metal matrix is less than 500 nm.

In some embodiments, a method for coating a wedge-shaped substrate of a hydro-electric turbine component is disclosed. The wedge-shaped substrate includes a tip portion and at least two side portions. The method includes sequentially coating the tip portion of the substrate and the side portions, by using a high velocity air fuel (HVAF) process. Coating the tip portion prior to coating the side portions is specifically advantageous to aid adequate heat distribution between the tip portion and the side portions. Further, the coating at the tip portion and the side portions are disposed such that the coating at the tip portion is at least 2 times thicker than the coating at the side portions. In some embodiments, as disclosed above, the wedge-shaped substrate includes an intermediate portion disposed between the tip and side portions and the method includes coating the intermediate portion after coating the tip portion and prior to coating the side portions. The specific sequence of coating the tip portion and then (optionally intermediate portions and then) side portions is contrary to the common knowledge and current practice in normal thermal or plasma spray processes. The coating is achieved by the HVAF process that includes expelling the erosion resistant material powder in a plume. In some embodiments of the method, the plume used is a narrow plume having a width less than 1 centimeter (cm).

In the HVAF process of coating, the method includes exposing the erosion resistant material powder to a temperature below a melting point of the powder. In some embodiments, the erosion resistant material powder is expelled at a velocity greater than 800 meters per second. The surfaces to be coated may be cleaned and prepared before applying the coating. In some embodiments, a roughness of the surface to be coated may be greater than 5 µm Ra and a roughness of the coated surface may be less than 4 µm Ra. In some embodiments, the surface to be coated may be preheated to a temperature up to 100° Celsius. In some embodiments, the method may be automated partially or completely. In a non-limiting example, a robotic device may be used to perform HVAF coating process. In this example, the sequential method steps may be converted into robotic programming sequence to automate the coating process.

In some embodiments, the HVAF process uses spray angle that has a deviation from orthogonal projection from a HVAF gun to the surface being coated. In certain embodiments, the spray angle may vary up to 30° with reference to orthogonal projection. In some embodiments, spray distance of the HVAF gun is in a range from 25 mm to 250 mm.

In some embodiments, the erosion resistant material powder includes cobalt, chromium, and a plurality of hard particles. The plurality of hard particles may include at least one of tungsten carbide, boron carbide, titanium nitride, titanium boride, silicon nitride, aluminum oxide, cubic boron nitride, chromium carbide, titanium carbide, vanadium carbide, chromium boride, silicon oxide, chromium oxide, or any combinations thereof. In an example embodiment, tungsten carbide particles are mixed with cobalt and chromium to form the erosion resistant material powder and this powder is used in the HVAF process to form the erosion resistant coating having tungsten carbide embedded into a cobalt chromium (CoCr) matrix. In some embodiments, the cobalt and chromium are combined with the tungsten carbide particles in a spray-drying and sintering process. Alternatively, a sintered and crushed powder with most of the cobalt chromium still present as metals can be used. Cobalt and chromium may also be combined with the tungsten carbide in a cast and crushed powder with some of the cobalt chromium reacted with the carbide. In some embodiments, the powders used for coating by the HVAF process may be further treated through processes such as heat treating, spherodizing etc., to enhance desired powder characteristics before subjecting to the powders to the coating process. When thermally sprayed by the HVAF process, the materials present in the powder may be deposited in a variety of compositions and crystallographic forms. As used herein, the terms tungsten carbide (WC) shall mean any of the crystallographic or compositional forms of tungsten carbide.

In some embodiments, the HVAF process is employed to deposit a coating having Co in an amount in a range from 4 weight % to 12 weight %, and Cr in an amount in a range from 2 weight % to 5 weight %, with the balance being WC. In certain embodiments, a total CoCr content is in a range from 6 to 14 weight %, with the balance being WC.

### EXAMPLES

The following examples illustrate methods, materials and results, in accordance with specific embodiments, and as such should not be construed as imposing limitations upon the claims.

Specific Pelton runner edge (splitter) samples were coated with tungsten carbide in cobalt chromium matrix (WC-CoCr) material by using a commercially available HVAF thermal spray gun. An alloy of 13Cr4Ni was used as the substrate and WC-CoCr powder with about 85 % WC content was used as the feedstock material. Particles size distribution of the feedstock material was in a range from about 3 microns to 20 microns. Propylene fuel along with compressed air was used at a standard combustion pressure. The gun was operated with about 0.8 m/s speed at a spray distance of 6-10 cm from the substrate. The radius of curvature of the splitters and thickness of the HVAF coatings were varied to study the effect of radius of curvature and coating thickness on stability and quality of the obtained coatings. Specifically, samples having up to about 2 mm radius of curvature were used. Some samples were coated using the same feedstock material and using the HVOF spray gun for comparison of the results. The thickness of the coatings deposited by HVOF was about 0.3 mm.

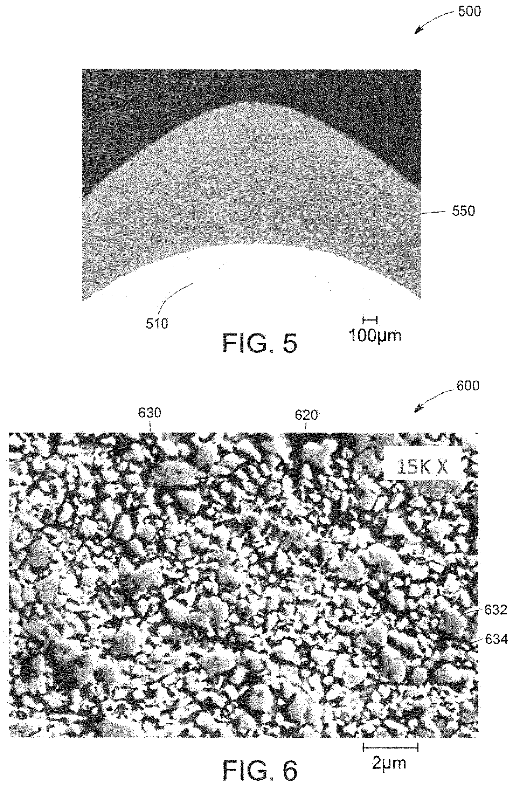

The test samples were subjected to visual examination for cracks, coating thickness and coating roughness measurements. Microstructural examination was conducted to know the microstructure, hardness, and porosity of the coatings. The samples were further tested for their adhesion, impact resistance and sediment erosion resistance. Multiple samples in each category were coated and examined to ascertain the results obtained. In some of the coated splitters having very low radius of curvature than 2 mm, a slight crack in the coating was observed when the thicknesses of the coating is greater than about 1 mm. FIG. 5 shows an optical micrograph 500 of a coated splitter sample of a Pelton bucket. Coating 550 of about 1 mm thickness was applied over a splitter substrate 510 having about 2 mm radius of curvature. The coating 550 appears to be smooth and does not have any cracks or delamination. Cracks or delamination was not observed in any of the splitter samples having radius of curvature of about 2 mm and thickness of coating about 1 mm. By repeating above experiments with multiple sets of samples having different radii of curvatures and coating thickness combinations, good understanding of relevant parameter ranges was obtained for achieving coatings that are free of cracks and delaminations and further have advantageous radius of curvature and coating thickness. This understanding helped achieve substantially crack free coatings that have both starting hydro-efficiency, efficiency retention, and durability. Coating parameters may be further varied and further sets of samples may be tested to achieve thicker coatings on samples having varied radius of curvatures, especially on samples that are having lower radius of curvature such as lower than 1 mm.

FIG. 6 shows scanning electron micrograph 600 recorded on a cross section of a WC-CoCr coating coated on a Pelton bucket splitter tip having a radius of curvature of about 2 mm. The coating thickness was about 1 mm. The micrograph exhibits tungsten carbide particles 630 in a CoCr matrix 620. A bimodal microstructure of the tungsten carbide particles 630, having relatively large particles 632 and relatively small particles 634 can be seen in the microstructure. The average size of the large WC hard particles 632 was less than 1 micron and the average size of the small WC hard particles 634 were observed to be less than 500 nm. The test samples having this coating were found to be highly impact tolerant as found by the visual examination conducted after 10 stone shots.

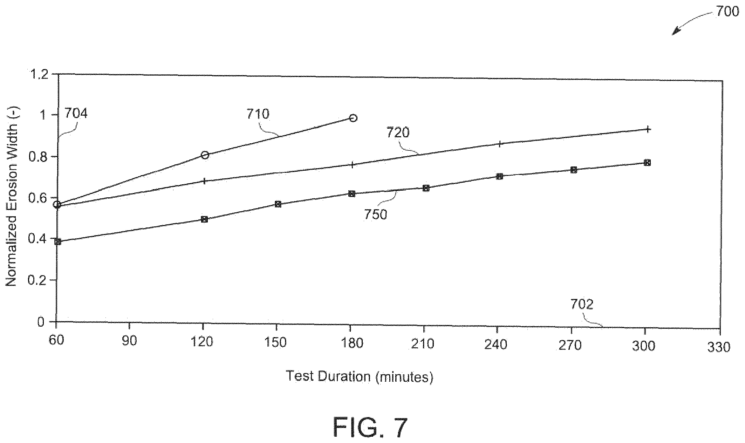

FIG. 7 gives a graphical illustration 700 of sediment erosion tests, representative of real river site field conditions, conducted for one of the representative test sample, and compared with respective base sample and another similar sample coated by HVOF method. The X-axis 702 of the graph represents test duration in minutes and the Y-axis 704 represents normalized erosion width. The erosion width of all the coated samples at various time intervals were normalized based on the erosion width of the uncoated base material after 3 hours of erosion, measured with the identical erosion parameters. Thus, in FIG. 7, the normalized erosion width of a coated sample at a certain time is normalized by dividing the erosion width obtained after 3 hours of erosion of the base sample. A lower normalized erosion width of a sample with a coating indicates a good protection obtained by that coating to the corresponding sample. Curve 710 represents the normalized erosion width of the base sample made of 13Cr4Ni stainless steel, a Pelton bucket splitter tip having approximately 2 mm radius of curvature. Curve 720 represents the normalized erosion width of the base sample coated with about 0.3 mm thick HVOF coating and curve 750 represents the normalized erosion width of the 1 mm thick coating obtained by HVAF technology on the base sample.

From the graph 700 of FIG. 7, it can be seen that the base sample coated with 1 mm thick HVAF coating had highest erosion protection compared to all other samples. Further, normalized erosion width of the HVOF coating is greater than the HVAF coated sample at all erosion testing times. The time duration required for removing the 1 mm thick HVAF coating present on the sample was found to be about 2.5x longer than the time duration required for removing the conventional, HVOF coatings of 0.3 mm thickness.

The results of the experiments show that thick WC-CoCr erosion resistant coating having greater than 0.5 mm thickness can be formed on the wedge-shaped substrate such as Pelton runner edge using the HVAF process. Some observed cracks or delamination may be avoided by optimizing the coating process parameters, system, method of application, and /or technology of HVAF coating. The HVAF coating with 1 mm thickness on the splitter having 2 mm radius of curvature was found to give satisfactory results. The coatings formed by HVAF were found to be impact tolerant and did not show any damage after 10 shots. From the sediment erosion test, it was seen that some HVAF samples that had crack in the coating layers also did not peel off even after 5 hours of test duration.

While the disclosure has been described with reference to an exemplary embodiment, it will be understood by those skilled in the art that various changes may be made, and equivalents may be substituted for elements thereof without departing from the scope of the disclosure. In addition, many modifications may be made to adapt a particular situation or material to the teachings of the disclosure without departing from the essential scope thereof. Therefore, it is intended that the disclosure not be limited to the particular embodiment disclosed as the best mode contemplated for carrying out this disclosure, but that the disclosure will include all embodiments falling within the scope of the appended claims.

## Claims

1. A hydro-electric turbine component (100) comprising:
a wedge-shaped substrate (210) comprising a tip portion (212) and at least two side portions (216); and
an erosion resistant coating (250) disposed on the wedge-shaped substrate (210), wherein the erosion resistant coating (250) disposed at the tip portion (212) is at least 2 times thicker than the erosion resistant coating (250) disposed at the side portions (216), and wherein the erosion resistant coating (250) comprises at least 99.5 percentage density.

2. The hydro-electric turbine component (100) according to claim 1, wherein a thickness of the erosion resistant coating (250) disposed at the tip portion (212) is in a range from 1 millimeter to 3 millimeters and thickness of the erosion resistant coating (250) disposed at the side portions (216) is in a range from 0.3 millimeters to 1 millimeter.

3. The hydro-electric turbine component (100) according to claim 1 or 2, having an intermediate portion (214) between the tip portion (212) and the side portions (216), and wherein the intermediate portion (214) has a tapering of thickness from the tip portion (212) to the side portions (216).

4. The hydro-electric turbine component (100) according to any of claims 1 to 3, wherein a radius of curvature of the tip portion (212) is in a range from 0.5 millimeters to 3.0 millimeters.

5. The hydro-electric turbine component (100) according to any of claims 1 to 4, wherein the erosion resistant coating (250) comprises a metal matrix composite comprising a cobalt chromium matrix.

6. The hydro-electric turbine component (100) according to any of claims 1 to 5, wherein the wedge-shaped substrate (210) comprises a splitter of a Pelton bucket, a W-cutout of the Pelton bucket, a Pelton needle, a seat ring, a guide vane of Francis, Kaplan, Bulb, or pump turbine, a runner blade of Francis, Kaplan, Bulb, or pump turbine, or combinations thereof.

7. The hydro-electric turbine component (100) according to any of claims 1 to 6, wherein the erosion resistant coating (250) is crack-free and comprises less than 0.5 percentage oxide content and greater than 1250 HV0.3 hardness.

8. The hydro-electric turbine component (100) according to any of claims 1 to 7, further comprising the erosion resistant coating (250) in a base portion (218) of the hydro-electric turbine component (100), wherein a thickness of the erosion resistant coating (250) is in a range from 0.1 millimeter to 0.3 millimeter.

9. The hydro-electric turbine component (100) according to any of claims 1 to 8, wherein an incident angle θ at the tip portion (212) is in a range from 15 degrees to 55 degrees.

10. A method for coating a wedge-shaped substrate (210) of a hydro-electric turbine component (100), the wedge-shaped substrate (210) comprising a tip portion (212) and at least two side portions (216), the method comprising:
coating the tip portion (212) of the substrate (210) by a high velocity air fuel process; and then
coating the side portions (216) by the high velocity air fuel process, to form an erosion resistant coating (250) on both the tip portion (212) and the side portions (216) such that the coating (250) at the tip portion (212) is at least 2 times thicker than the coating (250) at the side portions (216).

11. The method according to claim 10, comprising coating an intermediate portion (214) after coating the tip portion (212) and prior to coating the side portions (216), wherein the intermediate portion (214) is disposed between the tip portion (212) and side portions (216).

## Patentansprüche

1. Bauteil (100) einer hydroelektrischen Turbine, das umfasst:
ein keilförmiges Substrat (210), das einen Spitzenabschnitt (212) und mindestens zwei Seitenabschnitte (216) umfasst; und
eine erosionsbeständige Beschichtung (250), die auf dem keilförmigen Substrat (210) aufgebracht ist, wobei die erosionsbeständige Beschichtung (250), die auf dem Spitzenabschnitt (212) aufgebracht ist, mindestens 2 Mal stärker ist als die erosionsbeständige Beschichtung (250), die auf den Seitenabschnitten (216) aufgebracht ist, und wobei die erosionsbeständige Beschichtung (250) mindestens 99,5% Dichte umfasst.

2. Bauteil (100) einer hydroelektrischen Turbine nach Anspruch 1, wobei eine Stärke der erosionsbeständigen Beschichtung (250), die auf dem Spitzenabschnitt (212) aufgebracht ist, in einem Bereich von 1 Millimeter bis 3 Millimeter liegt, und eine Stärke der erosionsbeständigen Beschichtung (250), die auf den Seitenabschnitten (216) angeordnet ist, in einem Bereich von 0,3 Millimeter bis 1 Millimeter liegt.

3. Bauteil (100) einer hydroelektrischen Turbine nach Anspruch 1 oder 2, das einen Zwischenabschnitt (214) zwischen dem Spitzenabschnitt (212) und den Seitenabschnitten (216) aufweist, und wobei der Zwischenabschnitt (214) eine sich verjüngende Stärke von dem Spitzenabschnitt (212) zu den Seitenabschnitten (216) aufweist.

4. Bauteil (100) einer hydroelektrischen Turbine nach einem der Ansprüche 1 bis 3, wobei ein Krümmungsradius des Spitzenabschnitts (212) in einem Bereich von 0,5 Millimeter bis 3,0 Millimeter liegt.

5. Bauteil (100) einer hydroelektrischen Turbine nach einem der Ansprüche 1 bis 4, wobei die erosionsbeständige Beschichtung (250) einen Metallmatrix-Verbundstoff umfasst, der eine Kobalt-Chrom-Matrix umfasst.

6. Bauteil (100) einer hydroelektrischen Turbine nach einem der Ansprüche 1 bis 5, wobei das keilförmige Substrat (210) einen Splitter einer Pelton-Schaufel, einen W-Ausschnitt der Pelton-Schaufel, eine Pelton-Nadel, einen Sitzring, eine Francis-Leitschaufel, Kaplan-, Rohr- oder Pumpturbine, eine Francis-Laufradschaufel, Kaplan-, Rohr- oder Pumpturbine oder Kombinationen davon umfasst.

7. Bauteil (100) einer hydroelektrischen Turbine nach einem der Ansprüche 1 bis 6, wobei die erosionsbeständige Beschichtung (250) rissfrei ist und weniger als 0,5 % Oxidgehalt und Härte von mehr als 1250 HV0,3 umfasst.

8. Bauteil (100) einer hydroelektrischen Turbine nach einem der Ansprüche 1 bis 7, das weiter die erosionsbeständige Beschichtung (250) in einem Basisabschnitt (218) des Bauteils (100) einer hydroelektrischen Turbine umfasst, wobei eine Stärke der erosionsbeständigen Beschichtung (250) in einem Bereich von 0,1 Millimeter bis 0,3 Millimeter liegt.

9. Bauteil (100) einer hydroelektrischen Turbine nach einem der Ansprüche 1 bis 8, wobei ein Einfallswinkel θ an dem Spitzenabschnitt (212) in einem Bereich von 15 Grad bis 55 Grad liegt.

10. Verfahren zum Beschichten eines keilförmigen Substrats (210) eines Bauteils (100) einer hydroelektrischen Turbine, wobei das keilförmige Substrat (210) einen Spitzenabschnitt (212) und mindestens zwei Seitenabschnitte (216) umfasst, wobei das Verfahren umfasst:
Beschichten des Spitzenabschnitts (212) des Substrats (210) durch einen Hochgeschwindigkeits-Air-Fuel-Prozess, und dann
Beschichten der Seitenabschnitte (216) durch den Hochgeschwindigkeits-Air-Fuel-Prozess, um eine erosionsbeständige Beschichtung (520) sowohl auf dem Spitzenabschnitt (212) als auch auf den Seitenabschnitten (216) derart zu bilden, dass die Beschichtung (250) an dem Spitzenabschnitt (212) mindestens 2 Mal stärker ist als die Beschichtung (250) an den Seitenabschnitten (216).

11. Verfahren nach Anspruch 10, das das Beschichten eines Zwischenabschnitts (214) nach dem Beschichten des Spitzenabschnitts (212) und vor dem Beschichten der Seitenabschnitte (216) umfasst, wobei der Zwischenabschnitt (214) zwischen dem Spitzenabschnitt (212) und den Seitenabschnitten (216) angeordnet ist.

## Revendications

1. Composant de turbine hydroélectrique (100) comprenant :
un substrat cunéiforme (210) comprenant une partie de pointe (212) et au moins deux parties latérales (216) ; et
un revêtement résistant à l'érosion (250) disposé sur le substrat cunéiforme (210), dans lequel le revêtement résistant à l'érosion (250) disposé à la partie de pointe (212) est au moins 2 fois plus épais que le revêtement résistant à l'érosion (250) disposé aux parties latérales (216), et dans lequel le revêtement résistant à l'érosion (250) comprend une densité d'au moins 99,5 pour cent.

2. Composant de turbine hydroélectrique (100) selon la revendication 1, dans lequel une épaisseur du revêtement résistant à l'érosion (250) disposé à la partie de pointe (212) est dans une plage de 1 millimètre à 3 millimètres et une épaisseur du revêtement résistant à l'érosion (250) disposé aux parties latérales (216) est dans une plage de 0,3 millimètre à 1 millimètre.

3. Composant de turbine hydroélectrique (100) selon la revendication 1 ou 2, présentant une partie intermédiaire (214) entre la partie de pointe (212) et les parties latérales (216), et dans lequel la partie intermédiaire (214) présente un rétrécissement d'épaisseur depuis la partie de pointe (212) jusqu'aux parties latérales (216).

4. Composant de turbine hydroélectrique (100) selon l'une quelconque des revendications 1 à 3, dans lequel un rayon de courbure de la partie de pointe (212) est dans une plage de 0,5 millimètre à 3,0 millimètres.

5. Composant de turbine hydroélectrique (100) selon l'une quelconque des revendications 1 à 4, dans lequel le revêtement résistant à l'érosion (250) comprend un composite à matrice métallique comprenant une matrice cobalt chrome.

6. Composant de turbine hydroélectrique (100) selon l'une quelconque des revendications 1 à 5, dans lequel le substrat cunéiforme (210) comprend un diviseur d'auge Pelton, une découpe en W d'auge Pelton, une aiguille Pelton, un anneau de siège, une aube de guidage de turbine Francis, Kaplan, bulbe ou pompe, une pale de roue de turbine Francis, Kaplan, bulbe ou pompe, ou des combinaisons de ceux-ci.

7. Composant de turbine hydroélectrique (100) selon l'une quelconque des revendications 1 à 6, dans lequel le revêtement résistant à l'érosion (250) est sans fissure et comprend une teneur en oxyde inférieure à 0,5 pour cent et une dureté supérieure à 1250 HV0,3.

8. Composant de turbine hydroélectrique (100) selon l'une quelconque des revendications 1 à 7, comprenant en outre le revêtement résistant à l'érosion (250) dans une partie de base (218) du composant de turbine hydroélectrique (100), dans lequel une épaisseur du revêtement résistant à l'érosion (250) est dans une plage de 0,1 millimètre à 0,3 millimètre.

9. Composant de turbine hydroélectrique (100) selon l'une quelconque des revendications 1 à 8, dans lequel un angle incident θ à la partie de pointe (212) est dans une plage de 15 degrés à 55 degrés.

10. Procédé de revêtement d'un substrat cunéiforme (210) d'un composant de turbine hydroélectrique (100), le substrat cunéiforme (210) comprenant une partie de pointe (212) et au moins deux parties latérales (216), le procédé comprenant :
le revêtement de la partie de pointe (212) du substrat (210) par un processus air-carburant à grande vitesse ; et puis
le revêtement des parties latérales (216) par le processus air-carburant à grande vitesse, pour former un revêtement résistant à l'érosion (250) sur à la fois la partie de pointe (212) et les parties latérales (216) de sorte que le revêtement (250) à la partie de pointe (212) soit au moins 2 fois plus épais que le revêtement (250) aux parties latérales (216).

11. Procédé selon la revendication 10, comprenant le revêtement d'une partie intermédiaire (214) après le revêtement de la partie de pointe (212) et avant le revêtement des parties latérales (216), dans lequel la partie intermédiaire (214) est disposée entre la partie de pointe (212) et les parties latérales (216).
